# EUROPÄISCHE PATENTSCHRIFT

(11) **EP 2 853 100 B1**
(45) Veröffentlichungstag und Bekanntmachung des Hinweises auf die Patenterteilung: **27.11.2019**
(21) Anmeldenummer: 13720329.5
(22) Anmeldetag: 25.04.2013
(51) Int. Cl.: H04R 7/10, H04R 31/00

(54) **ASYMMETRISCHE MEHRSCHICHTMEMBRAN FÜR ELEKTROAKUSTISCHE WANDLER**
ASYMMETRICAL MULTI-LAYERED MEMBRANE FOR ELECTROACOUSTIC TRANSDUCERS
MEMBRANE ASYMÉTRIQUE À PLUSIEURS COUCHES DESTINÉE À UN CONVERTISSEUR ÉLECTROACOUSTIQUE

(30) Priorität: 21.05.2012 DE 102012208477
(43) Veröffentlichungstag der Anmeldung: 01.04.2015
(73) Patentinhaber: tesa SE, 22848 Norderstedt (DE)
(72) Erfinder: MÜSSIG, Bernhard, 21218 Seevetal (DE); TEPE, Yeliz, 22763 Hamburg (DE); EGGER, Michael, 22297 Hamburg (DE)
(86) Internationale Anmeldenummer: PCT/EP2013/058582
(87) Internationale Veröffentlichungsnummer: WO 2013/174609

(56) Entgegenhaltungen:
- EP-A1- 2 271 137
- DE-A1-102007 030 665
- US-A1- 2006 281 381
- US-A1- 2007 223 773

## Beschreibung

Die Erfindung betrifft ein asymmetrisches Mehrschicht-Laminat zur Verwendung als Membran für elektroakustische Wandler sowie ein Verfahren zur Herstellung dieses Mehrschicht-Laminats.

Mit dem allgemeinen Trend zu kleineren und kompakteren Geräten im Bereich der Unterhaltungselektronik müssen zwangsläufig auch die in Mobiltelefonen, Smartphones, Kopfhörern, Personal Digital Assistants (PDAs), Notebooks etc. enthaltenen Lautsprecher immer kleiner werden. Dadurch werden bezüglich den akustischen Eigenschaften und der Lebensdauer zunehmend höhere Anforderungen an die Membranen solcher Mikrolautsprecher, deren Größe typischerweise im Bereich 20 mm² bis 900 mm² liegt, gestellt.

Allgemein sollte das Material einer Lautsprechermembran gleichzeitig möglichst steif, leicht und gut gedämpft sein. Diese Anforderungen ergeben sich daraus, dass die Frequenz, bei der die Membran in Teilschwingungen aufbricht und ab der es verstärkt zu Resonanzen und Verzerrungen kommt, proportional zu (E/ρ)^{0.5} ist, wobei E den Elastizitätsmodul und ρ die Dichte der Membran bezeichnet. Mit zunehmendem Faktor (E/ρ)⁰⁻⁵ kann somit das obere Limit des Frequenzbereichs des Lautsprechers angehoben werden. Weitere Vorteile einer leichten und gleichzeitig steifen Membran sind eine schnelle Beschleunigung der Membran beim Impulsübergang und damit ein höherer erreichbarer Schalldruck. Auf der anderen Seite sollte die Membran zur Absenkung der Resonanzfrequenz f₀ und Unterdrückung von Resonanzspitzen im Frequenzgang gleichzeitig eine hohe interne Dämpfung tan δ besitzen. Da sich die Kriterien steif, leicht und gut gedämpft aber konstruktiv widersprechen, muss bei Lautsprechermembranen immer ein gewisser Kompromiss bezüglich des Membranmaterials eingegangen werden oder aber eine Kombination aus steifen und dämpfenden Schichten gewählt werden.

Die gängigsten Membranmaterialien sind Papier, Metall und Kunststoff, die häufig noch beschichtet oder modifiziert werden, um die genannten Anforderungen möglichst weitgehend zu erfüllen. Papier besitzt eine geringe Dichte und gute Dämpfung, die fehlende Steifigkeit kann zum Beispiel durch Verstärkung mit Glas- oder Kevlarfasern verbessert werden. Metalle weisen eine hohe Steifigkeit auf, sind dabei aber in der Regel nur schlecht gedämpft, was häufig ein Klirren und einen scharfen, metallischen Klang zur Folge hat. Die Dämpfung von Metallfolien (Aluminium, Titan, Beryllium) kann verbessert werden, indem z.B. Verbunde mit einer Mittelschicht aus weichen Polymeren oder dämpfenden Schäumen erzeugt werden. Kunststoff-Membranen haben den Vorteil, dass sie einen sehr weiten Bereich von weichen, gut gedämpften Polymeren bis hin zu sehr steifen Materialien mit geringer Dämpfung umfassen und für unterschiedliche Anwendungen jeweils passend ausgewählt werden können. Solche Kunststoff-Membranen basieren entweder auf imprägnierten Faser-Geweben oder auf Folien, deren Steifigkeit oder Dämpfungseigenschaften häufig durch Kombination mit steifen bzw. dämpfenden Schichten optimiert werden.

So beschreibt die EP 2 172 059 A eine 5-lagige Lautsprechermembran, bei der je eine steife Polyetheretherketon-Folie über je eine thermoplastische Klebmasseschicht auf beide Seiten eines dämpfenden Kohlenstofffaser-Vlieses aufgeklebt ist. In der US 2011-0272208 A wird ein 5-Lagenlaminat beschrieben, bei dem steife Außenschichten auf beide Seiten eines mit Klebmasse beschichteten Polyethylenterephthalat-Trägers aufgebracht sind. In der US 7,644,801 A ist ein 3-Schichtlaminat aus 2 Polyarylat-Folien und einer dazwischenliegenden Acrylat-Klebmasse genannt, das im Vergleich zu reinen Polyarylat-Folien deutlich weniger knittert und Falten wirft.

Die US 2006-281381 A zeigt ein Mehrschicht-Laminat zur Herstellung von Membranen für elektroakustische Wandler, umfassend zwei äußere Schichten und eine zwischen den Deckschichten angeordnete Klebmassenschicht, die auch ein Klebemassenlaminat sein kann. Bei einem solchen Klebeschichten-Laminat kann die eine Klebeschicht bevorzugt einen Hitzeschrumpf von 0,5 bis 0,8 % aufweisen, die andere bevorzugt einen Hitzeschrumpf von 0,6 bis 1 %.

Diese Beispiele zeigen, dass Mehrschicht-Laminate als Lautsprechermembranen prinzipiell gut geeignet sind, trotz der Vielzahl an unterschiedlichen Varianten eine optimale Lösung aber noch nicht gefunden ist.

Wegen der starken Erwärmung der Membranen von Mikrolautsprechern im Betrieb werden für diese häufig steife Folien aus hochtemperaturbeständigen Kunststoffen wie

Polyetheretherketon (PEEK), Polyetherketon (PEK), Polyetherketonketon (PEKK), Polyarylat (PAR), Polyetherimid (PEI), Polyphenylensulfid (PPS), Polyethylenterephthalat (PET), Polyethylennaphthalat (PEN), Polybutylenterephthalat (PBT) oder Aramiden eingesetzt. Die Mikrolautsprecher-Membranen werden entweder direkt aus solchen Folien oder aus Mehrschicht-Laminaten dieser Folien mit zusätzlichen dämpfenden Schichten geformt. Der Begriff Membran bezeichnet hierin die aus Folien oder FolienVerbunden geformte Membran, wie sie im fertigen Lautsprecher eingesetzt wird. Der Begriff Mehrschicht-Laminat bezeichnet hierin einen Verbund aus mindestens zwei Folien und zusätzlichen zwischen diesen Folien liegenden Schichten, aus dem die eigentliche Lautsprechermembran geformt wird.

Membranen aus Polyetheretherketon, im Folgenden PEEK genannt, besitzen eine herausragende Temperaturbeständigkeit und schneiden bei den zunehmend wichtigen Hochleistungs-Lebensdauertests der Lautsprecherhersteller am besten ab, weshalb gerade bei Mikrolautsprechern ein deutlicher Trend zur Verwendung von PEEK zu beobachten ist. Aufgrund der hohen Steifigkeit von PEEK besteht aus den oben genannten Gründen sehr großes Interesse an Membranen aus PEEK-Mehrschicht-Laminaten mit zusätzlichen dämpfenden Schichten.

Die zur Herstellung der Mehrschicht-Laminate eingesetzten PEEK-Folien sind kommerziell sowohl in amorpher als auch in teilkristalliner Ausführung erhältlich. Amorphe oder im Wesentlichen amorphe PEEK-Folien werden bei ihrer Herstellung so schnell auf Temperaturen unterhalb der Glasübergangstemperatur T_{g} abgekühlt, dass das Material keine wesentlichen kristallinen Bereiche ausbilden kann. Diese im Wesentlichen amorphen PEEK-Folien kristallisieren erst beim Erwärmen über die Glasübergangstemperatur während der Formgebung der Membran durch Tiefziehen oder Prägen. Im Gegensatz dazu besitzen teilkristalline PEEK-Folien bereits nach ihrer Herstellung einen kristallinen Anteil. Eine im Wesentlichen amorphe PEEK-Folie kann von einer teilkristallinen PEEK-Folie durch Dynamische Differenzkalorimetrie (DSC) unterschieden werden.

DSC-Messungen an amorphen und teilkristallinen PEEK-Folien wurden mit dem Messgerät DSC 204 F1 der Firma Netzsch durchgeführt. Dazu wurden ca. 5 mg der Folie in einen 25 µL Aluminium-Tiegel mit gelochtem Deckel eingewogen und mit einer Aufheizrate von 10 K/min von 20 °C auf 410 °C aufgeheizt. Die dabei aufgenommene bzw. abgegebene Wärme wird aufgezeichnet und die daraus resultierende Kurve als erste Aufheizkurve bezeichnet. Anschließend wurde mit einer Abkühlrate von 10 K/min wieder auf 20 °C abgekühlt und dabei die Abkühlkurve aufgenommen. Schließlich wurde eine zweite Aufheizkurve aufgenommen, indem ein zweites Mal mit einer Aufheizrate von 10 K/min von 20 °C auf 410 °C aufgeheizt wurde.

Die beiden Folientypen unterscheiden sich dadurch, dass unter diesen Bedingungen gemessene amorphe PEEK-Folien in der ersten Aufheizkurve einen signifikanten exothermen Kristallisationspeak zeigen, der bei der teilkristallinen PEEK-Folie fehlt. Eine im Sinne dieser Erfindung im Wesentlichen amorphe PEEK-Folie ist dadurch gekennzeichnet, dass sie unter den oben genannten DSC-Messbedingungen in der ersten Aufheizkurve eine Kristallisationswärme von mindestens 15 J/g (also 15 J/g oder mehr) zeigt. Eine im Sinne dieser Erfindung teilkristalline PEEK-Folie ist dadurch gekennzeichnet, dass sie unter den oben genannten DSC-Messbedingungen in der ersten Aufheizkurve eine Kristallisationswärme von höchstens 5 J/g (also 5 J/g oder weniger) zeigt. Diese Obergrenze wird aufgrund von potentiellen Schwankungen der Basislinie während der Messung angegeben, in der Regel ist in der ersten Aufheizkurve der teilkristallinen PEEK-Folie kein Kristallisationspeak zu beobachten.

Aufgrund der besseren Verarbeitbarkeit während der Formgebung werden für Lautsprechermembranen vorwiegend Mehrschicht-Laminate aus amorphen PEEK-Folien eingesetzt. Diese Mehrschicht-Laminate werden während des Tiefziehens oder Thermoformens bei Temperaturen oberhalb der Glasübergangstemperatur von 143 °C zur Kristallisation gebracht. Dadurch liegen die PEEK-Folien in der fertigen Membran in teilkristallinem Zustand vor und sorgen somit für eine nachträglich höhere Steifigkeit und Festigkeit der Membran.

Beim Verfahren des Tiefziehens kann die Dicke der tiefgezogenen Membran durch die Prozessbedingungen sehr gut eingestellt werden, aus einem PEEK-Mehrschicht-Laminat mit gegebener Gesamtdicke können dadurch unterschiedliche Membrandicken hergestellt werden und jeweils auf die Anforderungen verschiedener Lautsprecher-Designs angepasst werden. Der Nachteil dieses Verfahrens ist ein hoher Ausschuss, da je nach Tiefziehgrad nur ein sehr geringer Anteil des eingesetzten Mehrschicht-Laminats in der fertigen Membran endet. Dies macht das Tiefziehen gerade für die sehr teuren PEEK-Folien nicht wirtschaftlich.

Beim Verfahren des Multicavity-Thermoformens endet ein weitaus größerer Anteil des Mehrschicht-Laminats in der Membran, allerdings besteht wenig Spielraum in der Variation deren Dicke. Da die Resonanzfrequenz der Membran proportional zur ihrer Gesamtdicke ist, müssen zum Erreichen von niedrigen Resonanzfrequenzen beim Thermoformen deshalb von vornherein auch schon dünne Mehrschicht-Laminate und damit auch dünne PEEK-Folien eingesetzt werden. Die dünnsten kommerziell erhältlichen amorphen PEEK-Folien sind aktuell 6 µm dick. Trotz des großen Interesses an Mehrschicht-Laminaten aus diesen Folien konnten diese bisher nicht eingesetzt werden, da während des Multicavity-Thermoformens die in der Thermoform nach oben liegende und der Luft zugewandte Seite starke Falten wirft.

Überraschenderweise hat sich nun gezeigt, dass das Problem der Faltenbildung behoben wird, wenn die in der Thermoform nach oben liegende amorphe PEEK-Folie durch eine teilkristalline PEEK-Folie ersetzt wird. Durch Verwendung eines solchen asymmetrischen Mehrschicht-Laminats aus einer im Wesentlichen amorphen PEEK-Folie, Klebstoff-Schicht und teilkristalliner PEEK-Schicht wird damit die Herstellung dünner Membranen aus PEEK-Mehrschicht-Laminaten mittels des Verfahrens des Multicavity-Thermoformens ermöglicht.

Tatsächlich hat sich herausgestellt, dass auch andere Materialien, die entweder nicht kristallisieren können oder schon fertig auskristallisiert sind, eine der beiden amorphen PEEK-Folien ersetzen können.

Gegenstand der Erfindung ist daher Mehrschicht-Laminat zur Herstellung von Membranen für elektroakustische Wandler, umfassend
a) eine erste Schicht (im Rahmen dieser Schrift als "erste Deckschicht" bezeichnet) aus einer Polyetheretherketon-Folie (PEEK-Folie) mit einer Kristallisationswärme von mindestens 15 J/g (also 15 J/g oder mehr; Kristallisationswärme Q_{Kr} ≥ 15 J/g), bestimmt in der ersten Aufheizkurve der Dynamischen Differenzkalorimetrie-Messung - also einer im Wesentlichen amorphen PEEK-Folie -, b) ferner eine zweite Schicht (im Rahmen dieser Schicht als "zweite Deckschicht" bezeichnet) aus einer thermoplastischen Kunststoff-Folie mit einer Kristallisationswärme von höchstens 5 J/g (also 5 J/g oder weniger; Kristallisationswärme Q_{Kr} ≤ 5 J/g), bestimmt in der ersten Aufheizkurve der Dynamischen Differenzkalorimetrie-Messung - also einer solchen Folie, die im Wesentlichen zu keiner Kristallisation bzw. zu keiner weiteren Kristallisation fähig ist,-, und
c) eine zwischen der ersten und zweiten Deckschicht angeordneten Klebstoffschicht.

Das Mehrschicht-Laminat kann auf die drei genannten Schichten beschränkt sein, aber auch weitere Schichten im Laminataufbau aufweisen.

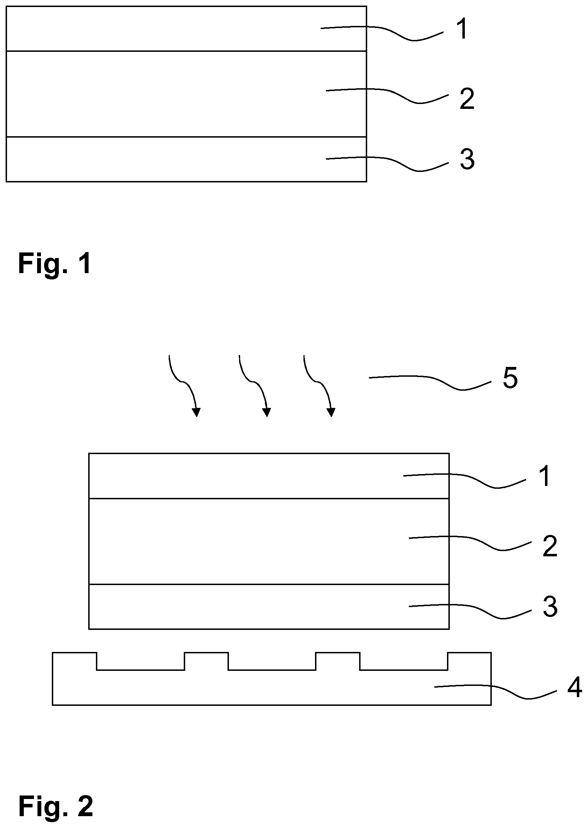

Ein 3-Schichtlaminat aus teilkristalliner PEEK-Folie (1), Klebmasse (2) und amorpher PEEK-Folie (3) zeigt beispielhaft Fig. 1.

Als erfindungsgemäß besonders geeignet im Sinne der zweiten Deckschicht hat sich eine teilkristalline PEEK-Folie herausgestellt, also eine solche PEEK-Folie, die eine Kristallisationswärme von höchstens 5 J/g, bestimmt in der ersten Aufheizkurve der Dynamischen Differenzkalorimetrie-Messung, aufweist.

Weitere im Sinne der Erfindung geeignete Folien für den Einsatz als zweite Deckschicht - also als Ersatz für eine der beiden amorphen PEEK-Folien herkömmlicher Aufbauten - sind beispielsweise Folien aus Polyphenylensulfid (PPS), Polyethylennaphthalat (PEN), Polyethylenterephthalat (PET), Polybutylenterephthalat (PBT), Polyarylat (PAR), Polyimid (PI), Polyetherimid (PEI), Polyphenylsulfon (PPSU), Polyethersulfon (PES) oder Polysulfon (PSU).

Bevorzugt werden Folien als zweite Deckschicht eingesetzt, die Dicken im Bereich von 1 µm bis 50 µm, bevorzugt von 2 µm bis 40 µm, besonders bevorzugt von 5 µm bis 15 µm besitzen.

Die amorphen PEEK-Folien für die erste Deckschicht im asymmetrischen Mehrschicht-Laminat weisen - unabhängig von den Dicken der Folien für die zweiten Deckschicht - ebenfalls Dicken im Bereich von 1 µm bis 50 µm, bevorzugt von 2 µm bis 40 µm, besonders bevorzugt von 5 µm bis 15 µm auf.

Die amorphe erste Deckschicht und die zweite, nicht kristallisationsfähige Deckschicht können dabei gleich dick gewählt werden.

Ein Vergleich der Eigenschaften der oben erwähnten, als zweite Deckschicht einsetzbaren Folien mit der kommerziell erhältlichen amorphen PEEK-Folie hat gezeigt, dass der Schrumpf von nicht kristallisationsfähigen Folien, insbesondere Folien der vorgenannten Materialien mit einer Kristallisationswärme von höchstens 5 J/g, deutlich geringer ist als der Schrumpf der amorphen PEEK-Folie. In Tabelle 1 sind beispielhaft vergleichende Werte gezeigt.

**Tabelle 1. Schrumpf verschiedener Folien bei 200 °C und 15 min.**

| | Morphologie | Schrumpf MD / % | Schrumpf TD / % |
|---|---|---|---|
| PEEK 6µ (Victrex, Aptiv 2000-006GS) | Amorph | 19 | 4 |
| PEEK 9µ (Victrex, Aptiv 2000-009GS) | Amorph | 12 | 4 |
| PEEK 8µ (Victrex, Aptiv 1000-008GS) | Teilkristallin | 2 | -2 |
| PPS 9µ (Toray, Torelina 3030) | Teilkristallin | 2 | 0.5 |
| PPSU 9µ (Ajedium) | Amorph | 0.5 | 0 |
| PAR 10µ (Lofo, Aryphan N681EM) | Amorph | 6 | 5 |
| PET 12µ (Toray, Lumirror 60.01) | Teilkristallin | 4 | 1 |

Gegenstand der Erfindung ist daher weiterhin ein Mehrschicht-Laminat zur Herstellung von Membranen für elektroakustische Wandler, umfassend eine erste Deckschicht, die nach 15 Minuten bei 200 °C in mindestens einer Richtung einen Schrumpf größer 10 % aufweist, eine zwischen der ersten und zweiten Deckschicht angeordneten Klebstoffschicht und einer zweiten Deckschicht, die nach 15 Minuten bei 200 °C in Längs- und Querrichtung jeweils einen Schrumpf geringer 10 %, bevorzugt geringer 5 % aufweist. Bevorzugt werden als Folien für die erste und die zweite Deckschicht solche Folien eingesetzt, wie sie im weiteren in dieser Schrift beschrieben sind, die Ausführungen zu diesen Folien gelten für dieses Mehrschicht-Laminat entsprechend. Der Schrumpf der Folien wird bestimmt, indem bei Raumtemperatur mit einem Folienstift zwei Markierungen im Abstand von 10 cm auf die Folie gemacht werden und die Folien im Umluftofen bei 200 °C frei hängend für 15 Minuten gelagert werden. Nach dem Abkühlen wird der Abstand der beiden Markierungen erneut gemessen und die prozentuale Änderung des Abstands bestimmt. Diese Messung erfolgt sowohl in Längsrichtung der Folie - auch Machine Direction oder MD genannt - als auch in Querrichtung der Folie - auch Transverse Direction oder TD genannt - um den unterschiedlichen Schrumpf in Abhängigkeit von der Orientierung zu erfassen.

Im erfindungsgemäßen Mehrschicht-Laminat ist zwischen der amorphen PEEK-Folie und der teilkristallinen PEEK-Folie eine Zwischenschicht aus einem Klebstoff angeordnet. Diese Schicht hat die Funktion, die oberhalb und unterhalb liegenden Folien stabil zu verbinden und die Schwingung der steifen Außenfolien zu dämpfen.

Geeignete Klebmassen sind in Lösungsmitteln gelöste Polyacrylate oder wässrige Polyacrylat-Dispersionen sowie mit Kolophonium-Harzen modifizierter Natur- und Synthesekautschuk. Besonders geeignet sind dabei gelöste Polyacrylat-Klebmassen.

Die Klebstoff-Schicht wird bevorzugt aus Lösungsmittel oder aus Wasser mit Hilfe einer Düse oder eines Rakels auf die erste Deckschicht - insbesondere auf eine amorphe PEEK-Folie der Dicke 6 µm bis 12 µm - beschichtet und anschließend für 5 bis 30 Minuten bei 100 bis 170 °C getrocknet. Auf die getrocknete Klebmasse wird anschließend die zweite Deckschicht - insbesondere eine teilkristalline PEEK-Folie der Dicke 6 µbis 12 µm, bevorzugt 8 µm - zukaschiert oder auflaminiert.
Die Schichtdicke des Klebstoffs beträgt nach dem Trocknen 2 µm bis 100 µm, bevorzugt 5 µm bis 50 µm, besonders bevorzugt 10 µm bis 30 µm.

Die erfindungsgemäßen Mehrschicht-Laminate lassen sich hervorragend in einem Verfahren zur Herstellung von Membranen für elektroakustische Wandler einsetzen, wobei sie dem Prozess des Multicavity-Thermoformens unterzogen werden. Bei diesem Verfahren wird das Mehrschicht-Laminat auf die beheizbare Thermoform gelegt, die Vertiefungen mit dem Negativ-Abdruck der zu formenden Membran enthält. Anschließend wird das Mehrschicht-Laminat z.B. durch IR-Strahlung aufgeheizt und dadurch erweicht und dann von oben mit Druckluft in die Vertiefungen gepresst. Alternativ kann das erweichte Mehrschicht-Laminat auch mit einem Stempel aus Silikon oder geschäumtem Silikon in die Formen gepresst werden. Die mit diesem Verfahren erzeugten erfindungsgemäßen Membranen zeigten dabei deutlich geringere Faltenbildung als Membranen aus zwei 6 bis 9 µm dicken amorphen PEEK-Folien mit dazwischen liegender Klebmasseschicht.

Eine vorteilhafte Anordnung des erfindungsgemäßen Laminats in der Thermoform zeigt Fig. 2. Die Bezugsziffern 1 bis 3 beschreiben dabei das Mehrschicht-Laminat wie für Fig. 1 dargestellt. Dieses Mehrschicht-Laminat wird auf die vorzugsweise beheizte Thermoform 4 gelegt und nach dem Erwärmen mit Druckluft (5) in die Vertiefungen der Thermoform gepresst.
Gegenstand der Erfindung ist schließlich auch die Verwendung von Mehrschicht-Laminaten, wie sie im Rahmen dieser Schrift beschrieben wurden, zur Herstellung von Membranen für elektroakustische Wandler.

Folgendes Beispiel soll die Erfindung erläutern, ohne sie beschränken zu wollen.

### Beispiel 1

Die amorphe PEEK-Folie Aptiv 2000-006GS der Firma Victrex, Dicke 6 µm, wird mit einer Acrylat-Klebmasse in einer Schichtdicke von 20 µm beschichtet und anschließend für 5 Minuten bei 120 °C getrocknet. Daraufhin wird die teilkristalline PEEK-Folie Aptiv 1000-008GS, Dicke 8 µm, auf die Klebmasse-Schicht aufgebracht und durch Andrücken mit einer Rolle blasenfrei auflaminiert. Aus diesem Mehrschicht-Laminat wird ein ca. 10 cm mal 10 cm großer Bereich ausgeschnitten und so auf die Thermoform gelegt, dass die amorphe PEEK-Folie auf der beheizten Prägeform liegt und die teilkristalline Folie nach oben zeigt. Anschließend wird das Laminat in der Thermoform erwärmt und durch Anlegen von Druck in die Form der fertigen Membran gepresst. Im Gegensatz zu Mehrschicht-Laminaten aus zwei 6 bis 9 µm dicken amorphen PEEK-Folien mit dazwischen liegender Klebmasseschicht tritt dabei das Problem der Faltenbildung in der nach oben zeigenden und der Druckluft zugewandten PEEK-Folie nicht auf.

## Patentansprüche

1. Mehrschicht-Laminat zur Herstellung von Membranen für elektroakustische Wandler, umfassend
- eine erste Deckschicht (1) aus einer Polyetheretherketon-Folie ("PEEK-Folie"),
- eine zweite Deckschicht (2) aus einer thermoplastischen Kunststoff-Folie, und
- eine zwischen der ersten und zweiten Deckschicht angeordnete Klebstoffschicht (3),
**dadurch gekennzeichnet, dass**
- die erste Deckschicht (1) eine Kristallisationswärme von mindestens 15 J/g aufweist, bestimmt in der ersten Aufheizkurve der Dynamischen Differenzkalorimetrie-Messu ng,
- die zweite Deckschicht (2) mit einer Kristallisationswärme von höchstens 5 J/g aufweist, bestimmt in der ersten Aufheizkurve der Dynamischen Differenzkalorimetrie-Messung.

2. Mehrschicht-Laminat zur Herstellung von Membranen für elektroakustische Wandler, umfassend
- eine erste Deckschicht (1),
- eine zweite Deckschicht (2), die nach 15 Minuten bei 200 °C in Längs- und Querrichtung jeweils einen Schrumpf geringer 10 % aufweist, und
- eine zwischen der ersten und zweiten Deckschicht angeordnete Klebstoffschicht (3),
**dadurch gekennzeichnet, dass**
- die erste Deckschicht (1) nach 15 Minuten bei 200 °C in mindestens einer Richtung einen Schrumpf größer 10 % aufweist.

3. Mehrschicht-Laminat nach einem der vorangehenden Ansprüche, **dadurch gekennzeichnet, dass**
die zweite Deckschicht (2) aus einer zumindest teilkristallinen PEEK-Folie besteht.

4. Mehrschicht-Laminat nach Anspruch 1 oder 2, **dadurch gekennzeichnet, dass** die zweite Deckschicht (2) aus einem Kunststoff besteht, dessen Hauptbestandteil ausgewählt ist aus der Gruppe bestehend aus Polyethylenterephthalat, Polybutylenterephthalat, Polyethylennaphthalat, Polyetherimid, Polyimid, Polyarylat, Polyphenylensulfid, Polyphenylsulfon, Polysulfon, Polyethersulfon.

5. Mehrschicht-Laminat nach einem der vorhergehenden Ansprüche, **dadurch gekennzeichnet, dass**
die Schichtdicken der beiden Deckschichten (1, 2) jeweils 1 µm bis 50 µm betragen.

6. Mehrschicht-Laminat nach einem der vorhergehenden Ansprüche, **dadurch gekennzeichnet, dass**
die Schichtdicke der Klebstoffschicht 2 µm bis 100 µm beträgt.

7. Verfahren zur Herstellung von Membranen für elektroakustische Wandler aus einem Mehrschicht-Laminat nach einem der Ansprüche 3 bis 6 mittels Multicavity-Thermoformens, wobei die erste Deckschicht (1) auf der beheizten Prägeform liegt.

8. Verwendung von Mehrschicht-Laminaten nach einem der Ansprüche 1 bis 6 zur Herstellung von Membranen für elektroakustische Wandler.

## Claims

1. Multilayer laminate for the production of membranes for electroacoustic transducers, comprising
- a first outer layer (1) made of a polyetheretherketone foil ("PEEK foil"),
- a second outer layer (2) made of a thermoplastic foil, and
- an adhesive layer (3) arranged between the first and second outer layer, **characterized in that**
- the first outer layer (1) has a heat of crystallization of at least 15 J/g, determined in the first heating curve in differential scanning calorimetry,
- the second outer layer (2) has a heat of crystallization of at most 5 J/g, determined in the first heating curve in differential scanning calorimetry.

2. Multilayer laminate for the production of membranes for electroacoustic transducers, comprising
- a first outer layer (1),
- a second outer layer (2), the shrinkage of which in longitudinal and transverse direction respectively after 15 minutes at 200°C is less than 10%, and
- an adhesive layer (3) arranged between the first and second outer layer
**characterized in that**
- the shrinkage of the first outer layer (1) in at least one direction after 15 minutes at 200°C is greater than 10%.

3. Multilayer laminate according to either of the preceding claims, **characterized in that** the second outer layer (2) is composed of an at least semicrystalline PEEK foil.

4. Multilayer laminate according to Claim 1 or 2, **characterized in that**
the second outer layer (2) is composed of a plastic of which the main constituent is selected from the group consisting of polyethylene terephthalate, polybutylene terephthalate, polyethylene naphthalate, polyetherimide, polyimide, polyarylate, polyphenylene sulfide, polyphenyl sulfone, polysulfone, polyether sulfone.

5. Multilayer laminate according to any of the preceding claims, **characterized in that** the thicknesses of the two outer layers (1, 2) are respectively from 1 µm to 50 µm.

6. Multilayer laminate according to any of the preceding claims, **characterized in that** the thickness of the adhesive layer is from 2 µm to 100 µm.

7. Process for the production of membranes for electroacoustic transducers made of a multilayer laminate according to any of Claims 3 to 6 by means of multicavity thermoforming, where the first outer layer (1) is in contact with the heated embossing mould.

8. Use of multilayer laminates according to any of Claims 1 to 6 for the production of membranes for electroacoustic transducers.

## Revendications

1. Stratifié multicouche pour la fabrication de membranes pour convertisseurs électro-acoustiques, comprenant :
- une première couche de recouvrement (1) en un film de polyéther-éther-cétone (« film PEEK »),
- une deuxième couche de recouvrement (2) en un film en matière plastique thermoplastique, et
- une couche d'adhésif (3) agencée entre la première et la deuxième couche de recouvrement,
**caractérisé en ce que**
- la première couche de recouvrement (1) présente une chaleur de cristallisation d'au moins 15 J/g, déterminée dans la première courbe de chauffage de la mesure de calorimétrie différentielle dynamique,
- la deuxième couche de recouvrement (2) présente une chaleur de cristallisation d'au plus 5 J/g, déterminée dans la première courbe de chauffage de la mesure de calorimétrie différentielle dynamique.

2. Stratifié multicouche pour la fabrication de membranes pour convertisseurs électro-acoustiques, comprenant :
- une première couche de recouvrement (1),
- une deuxième couche de recouvrement (2), qui présente après 15 minutes à 200 °C dans la direction longitudinale et transversale à chaque fois un retrait inférieur à 10 %, et
- une couche d'adhésif (3) agencée entre la première et la deuxième couche de recouvrement,
**caractérisé en ce que**
- la première couche de recouvrement (1) présente après 15 minutes à 200 °C dans au moins une direction un retrait supérieur à 10 %.

3. Stratifié multicouche selon l'une quelconque des revendications précédentes, **caractérisé en ce que** la deuxième couche de recouvrement (2) est constituée par un film de PEEK au moins partiellement cristallin.

4. Stratifié multicouche selon la revendication 1 ou 2, **caractérisé en ce que** la deuxième couche de recouvrement (2) est constituée par une matière plastique, dont le constituant principal est choisi dans le groupe constitué par le polyéthylène téréphtalate, le polybutylène téréphtalate, le polyéthylène naphtalate, le polyéther-imide, le polyimide, le polyarylate, le polysulfure de phénylène, la polyphénylsulfone, la polysulfone, la polyéthersulfone.

5. Stratifié multicouche selon l'une quelconque des revendications précédentes, **caractérisé en ce que** les épaisseurs de couche des deux couches de recouvrement (1, 2) sont à chaque fois de 1 µm à 50 µm.

6. Stratifié multicouche selon l'une quelconque des revendications précédentes, **caractérisé en ce que** l'épaisseur de couche de la couche d'adhésif est de 2 µm à 100 µm.

7. Procédé de fabrication de membranes pour convertisseurs électro-acoustiques à partir d'un stratifié multicouche selon l'une quelconque des revendications 3 à 6 par thermoformage multicavité, la première couche de recouvrement (1) se situant sur la forme de gaufrage chauffée.

8. Utilisation de stratifiés multicouches selon l'une quelconque des revendications 1 à 6 pour la fabrication de membranes pour convertisseurs électro-acoustiques.
